# FASCICULE DE BREVET EUROPEEN

(11) **EP 2 932 183 B1**
(45) Date de publication et mention de la délivrance du brevet: **17.05.2017**
(21) Numéro de dépôt: 13821875.5
(22) Date de dépôt: 17.12.2013
(51) Int. Cl.: F41G 3/06, F42C 17/04, F41G 3/14, G01S 17/89, G01S 17/10

(54) **PROCÉDÉ D'ACQUISITION DES COORDONNÉES D'UN POINT DE DÉCLENCHEMENT D'UN PROJECTILE ET CONDUITE DE TIR METTANT EN OEUVRE UN TEL PROCÉDÉ**
VERFAHREN ZUR ERFASSUNG DER KOORDINATEN EINER GESCHOSSABFEUERUNGSSTELLE UND FEUERLEITANLAGE UNTER VERWENDUNG SOLCH EINES VERFAHRENS
METHOD FOR ACQUIRING THE COORDINATES OF A PROJECTILE FIRING POINT AND FIRE-CONTROL SYSTEM USING SUCH A METHOD

(30) Priorité: 17.12.2012 FR 1203495
(43) Date de publication de la demande: 21.10.2015
(73) Titulaire: NEXTER Systems, 42328 Roanne (FR)
(72) Inventeur: MULLER, Sylvain, F-18023 Bourges (FR)
(74) Mandataire: Cabinet Chaillot
(86) Numéro de dépôt international: PCT/FR2013/053142
(87) Numéro de publication internationale: WO 2014/096686

(56) Documents cités:
- EP-A1- 2 009 387
- US-A- 4 920 412
- US-A1- 2004 233 097

## Description

Le domaine technique de l'invention est celui des procédés permettant l'acquisition des coordonnées d'un point de déclenchement d'un projectile sur trajectoire et au-dessus d'une portion de terrain sur laquelle se trouve un objectif.

L'invention vise en particulier les conduites de tir pouvant être associées à une arme tirant des projectiles explosifs, ou des rafales de tels projectiles.

Les conduites de tir permettent de fournir les coordonnées d'un point de déclenchement pour un projectile tiré par l'arme.

Il est classique de mettre en oeuvre une conduite de tir associant un télémètre laser et un calculateur balistique. Le télémètre permet de déterminer la distance à laquelle se trouve une cible. Le calculateur détermine à partir de cette distance les angles de site et de gisement à donner à l'arme ainsi que la programmation qui doit être donnée au projectile à tirer, par exemple la temporisation de la mise à feu du projectile.

Les conduites de tir connues sont particulièrement bien adaptées lorsque la cible est visible, de taille suffisante et facilement repérable, donc lorsque la distance à la cible peut être facilement mesurée.

Ces conduites de tir sont par contre inadaptées à l'acquisition de cibles de petite taille, dispersées ou bien temporairement ou partiellement masquées. Ces dernières sont en effet pratiquement impossibles à télémétrer. L'opérateur doit alors effectuer plusieurs tirs de réglage pour déterminer la bonne distance de déclenchement des projectiles.

US 2004/233097 A1 divulgue un procédé d'acquisition des coordonnées d'un point de déclenchement d'un projectile ou d'une rafale de projectiles sur trajectoire et au-dessus d'une portion de terrain sur laquelle se trouve un objectif, lequel procédé comprend les étapes consistant à acquérir une représentation graphique d'une portion de terrain où se trouve l'objectif et à récupérer les coordonnées d'un point de déclenchement souhaité par l'opérateur lorsque ce dernier a choisi la localisation qui lui convient.

Par ailleurs, US 4 920 412 A divulgue un procédé d'imagerie active à ouverture synchronisée afin d'observer des objets partiellement obscurcis.

L'invention a pour but de proposer un procédé d'acquisition des coordonnées d'un point de déclenchement d'un projectile, procédé permettant d'engager d'emblée une cible de petite taille, dispersée ou masquée et avec une bonne probabilité d'interception.

Ainsi l'invention a pour objet un procédé d'acquisition des coordonnées d'un point de déclenchement d'un projectile ou d'une rafale de projectiles sur trajectoire et au-dessus d'une portion de terrain sur laquelle se trouve un objectif, procédé caractérisé en ce qu'il comporte les étapes suivantes:
on procède à l'émission d'au moins une impulsion laser ayant une durée déterminée à partir d'une source laser et en direction de la portion de terrain où se trouve l'objectif,
on procède à au moins une réception des images réfléchies par la portion de terrain à l'aide d'un récepteur équipé de moyens permettant de visualiser de façon synchronisée la réflexion des impulsions laser sous la forme d'une tranche d'observation de la portion de terrain, tranche ayant une largeur éventuellement modifiable par le choix d'une durée de l'émission ou de la réception laser et dont la distance par rapport au récepteur est modifiable par le réglage d'un retard entre l'émission et la réception de l'impulsion laser,
on récupère les coordonnées d'un point de déclenchement souhaité par l'opérateur lorsque ce dernier a choisi la localisation qui lui convient après avoir déplacé la tranche d'observation par rapport au récepteur et éventuellement réglé la largeur de la tranche, le point de déclenchement se trouvant à l'intérieur de ladite tranche.

Avantageusement, la largeur de la tranche sera choisie sensiblement égale à la profondeur d'une zone d'efficacité du projectile ou de la rafale.

Selon un mode particulier de réalisation, on affichera sur un moyen de visualisation destiné à un opérateur une image de la tranche observée, l'image incorporant en surimpression une image de la zone d'efficacité du projectile ou de la rafale, lorsqu'il ou elle est déclenché au niveau d'un point de déclenchement associé à cette zone d'efficacité et positionné dans la tranche d'observation, l'opérateur ayant la possibilité de déplacer la zone d'efficacité par rapport à l'image de la tranche, les coordonnées du point de déclenchement étant déterminées après le déplacement de la zone d'efficacité.

L'invention a également pour objet une conduite de tir pouvant être associée à une arme tirant des projectiles ou des rafales de projectiles et permettant de fournir les coordonnées d'un point de déclenchement pour un projectile ou une rafale tiré par l'arme, conduite de tir mettant en oeuvre le procédé selon l'invention et caractérisée en ce qu'elle comprend :
au moins un moyen d'observation laser à impulsions synchronisées associant une source ou émetteur laser pouvant émettre des impulsions ayant une durée déterminée et un récepteur équipé de moyens permettant de visualiser de façon synchronisée la réflexion des impulsions laser sous la forme d'une tranche d'observation de la portion de terrain ayant une largeur éventuellement modifiable par le choix d'une durée de l'émission ou de la réception laser et dont la distance par rapport au récepteur est modifiable par le réglage d'un retard entre l'émission et la réception,
un calculateur pouvant reconstruire à l'aide d'un algorithme approprié une image de la tranche d'observation acquise par le moyen d'observation, image qui est affichée sur un moyen de visualisation,
un premier moyen de commande destiné à un utilisateur et permettant de positionner et déplacer ladite tranche d'observation à plus ou moins grande distance du moyen d'observation,
un second moyen de commande permettant à l'opérateur de positionner et déplacer sur l'image de la tranche observée une image en surimpression d'une zone d'efficacité du projectile ou de la rafale, lorsqu'il ou elle est déclenché au niveau d'un point de déclenchement choisi dans la tranche d'observation,
le calculateur déterminant de façon continue les coordonnées du point de déclenchement associé à la zone d'efficacité et qui est situé à l'intérieur de la tranche lorsque l'opérateur met en oeuvre les premier et second moyens de commande pour déplacer la tranche d'observation et la zone d'efficacité,
un moyen de validation permettant à l'utilisateur de choisir une localisation particulière de la zone d'efficacité, le calculateur fournissant alors les coordonnées du point de déclenchement souhaité pour le projectile ou la rafale.

Suivant un mode de réalisation, le récepteur est une caméra équipée d'un obturateur synchronisé avec l'émission laser et ouvrant la caméra à l'issue d'au moins un retard déterminé par rapport à l'émission, le retard entre l'émission et la réception permettant de régler la distance de la tranche d'observation par rapport au récepteur.

Selon une variante, l'obturateur synchronisé pourra aussi permettre de régler la largeur de la tranche d'observation.

L'image de la zone d'efficacité pourra avantageusement être semi-transparente.

L'image de la zone d'efficacité pourra être dans une couleur différente de celle du reste de l'image.

L'invention sera mieux comprise à la lecture de la description qui va suivre d'un mode particulier de réalisation, description faite en référence aux dessins annexés et dans lesquels :
- la figure 1 montre une portion de terrain sur laquelle se trouvent des cibles et un véhicule équipé d'un système d'arme et d'une conduite de tir selon l'invention,
- les figures 2a et 2b schématisent le fonctionnement d'un moyen d'observation utilisé par l'invention,
- la figure 3 montre une image du terrain tel que visualisée par le tireur à partir d'une caméra classique sans mise en oeuvre de l'invention,
- la figure 4 schématise l'acquisition tomographique de plans d'image du terrain,
- la figure 5 est un schéma décrivant l'architecture de la conduite de tir selon l'invention,
- la figure 6 montre une image du terrain après mise en oeuvre de l'invention.

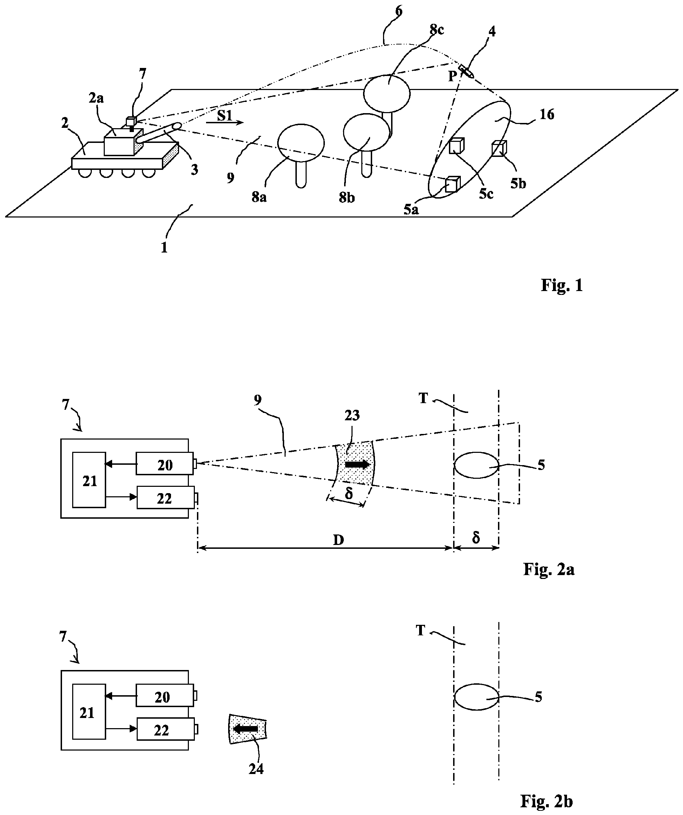

En se reportant à la figure 1, on a représenté une portion de terrain 1 sur laquelle se trouve un véhicule 2 équipé d'une tourelle 2a portant un tube d'arme 3.

Le tube d'arme 3 est destiné à tirer des projectiles 4 explosifs en direction de cibles 5a,5b,5c réparties sur le terrain 1. Un seul projectile 4 est représenté ici sur sa trajectoire 6.

Le tube d'arme 3 est orientable en site et en gisement par rapport au véhicule. La tourelle 2a peut ainsi pivoter suivant un axe vertical (réglage en gisement) et le tube 3 peut basculer par rapport à la tourelle 2a suivant un axe sensiblement horizontal (réglage en site). Des motorisations appropriées sont associées à ces réglages en site et en gisement du tube d'arme 3.

La tourelle 2a porte également un moyen d'observation 7 qui est ici constitué par un capteur 7 actif laser, associant un émetteur laser et un récepteur, et permettant de visualiser de façon synchronisée la réflexion des impulsions laser sous la forme d'une tranche d'observation du terrain.

Ces capteurs à imagerie active mettent en oeuvre la technologie connue sous la dénomination anglo-saxonne "Sliding Range Gating" (ou détection à ouverture synchronisée).

Les figures 2a et 2b montrent de façon schématique la structure d'un tel capteur 7 et son mode de fonctionnement.

Le capteur ou moyen d'observation 7 comporte un laser 20 (émetteur) qui opère dans la gamme de longueurs d'onde de 1,06 micromètres à 1,54 micromètres. Ce laser 20 émet des impulsions en direction d'un objectif 5 et il est contrôlé par une électronique de commande 21. L'électronique de commande 21 permet de gérer la durée des impulsions 23 qui sont émises. La durée de l'impulsion permet de définir la largeur δ d'une tranche T d'analyse du terrain.

Le capteur ou moyen d'observation 7 incorpore aussi une caméra 22 (ou récepteur) qui est pilotée par l'électronique de commande 21. Cette dernière comporte un obturateur (non représenté) qui est synchronisé avec l'émission laser et ouvre la caméra à l'issue d'au moins un retard R déterminé par rapport à l'émission de l'impulsion 23. L'obturateur est piloté par l'électronique de commande 21.

Ce retard R correspond au délai nécessaire à la lumière pour parcourir deux fois la distance D séparant le capteur 7 de l'objectif 5, le retard entre l'émission et la réception permettant de régler la distance entre la tranche d'observation T et le récepteur 22, donc entre la tranche T et le capteur 7.

Ainsi la caméra 22 est fermée à toutes les lumières rétrodiffusées par le terrain et par l'impulsion 23 et elle n'est ouverte que pour recevoir une partie 24 de l'impulsion 23 qui a été réfléchie par l'objectif 5.

Avec cette technique il est donc possible d'acquérir par le moyen d'observation 7 des images provenant d'une tranche T de terrain de largeur δ et située à une distance D du capteur 7. La distance D et la largeur δ étant modifiables par l'opérateur.

Selon un autre mode de réalisation, il est possible de mettre en oeuvre un laser 20 émettant des impulsions dont la durée permet de définir une largeur supérieure à la largeur δ souhaitée pour la tranche T d'analyse du terrain. Dans ce cas on associera à ce radar une caméra ou récepteur 22 dotée d'un obturateur, synchronisé à l'émission laser, mais ayant une durée d'ouverture permettant de ne retenir que les signaux relatifs à une tranche de terrain de largeur δ. Dans ce cas c'est l'obturateur qui permet de définir à la fois la largeur δ (par sa durée d'ouverture) et la distance D (par le retard R entre son ouverture et l'émission laser).

Le moyen d'observation 7 est couplé à une conduite de tir (non visible sur la figure 1) qui est interne à la tourelle 2a et qui permet de commander les motorisations assurant le pointage de la tourelle 2a et du tube 3 de l'arme en direction des cibles 5a,5b,5c.

La conduite de tir assurera aussi la programmation des projectiles tirés par le tube. Cette programmation comporte la mise en place, par une interface de programmation (classique et non représentée), dans une mémoire de la fusée du projectile d'un instant de déclenchement du projectile à l'issue de l'instant de tir.

Les cibles 5a, 5b, 5c sont de petites dimensions, par exemple des véhicules légers ou des groupes de fantassins.

Les cibles sont par ailleurs partiellement masquées vis à vis du véhicule 2 par des éléments de paysage, tels que des arbres 8a, 8b, 8c, dont les feuillages ne sont pas complètement opaques à la lumière.

On a représenté sur la figure 1 par un cône pointillé 9 le secteur d'observation du moyen d'observation 7. Le moyen d'observation 7 regarde donc le terrain suivant une direction S1 qui est confondue avec l'axe du cône 9.

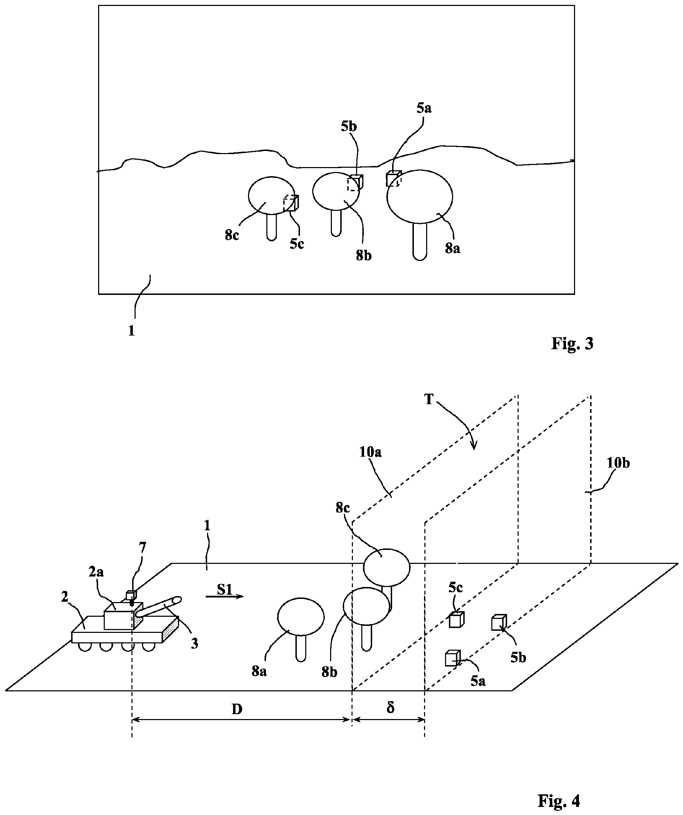

La figure 3 montre l'image du terrain 1 telle qu'elle est fournie directement sur un écran de la conduite de tir à partir d'une caméra classique sans mise en oeuvre de l'invention.

On remarque les cibles 5a, 5b et 5c sont partiellement masquées par les arbres 8a, 8b et 8c. Une télémétrie des cibles à partir de la conduite de tir est alors difficile ou impossible.

Les arbres 8a,8b,8c interceptent les signaux de télémétrie laser, conduisant à une mauvaise programmation de l'instant de déclenchement du projectile 4 sur sa trajectoire.

Une erreur de programmation conduit à une diminution importante de la probabilité d'atteinte. On a pu vérifier que, pour un tir d'une rafale de dix projectiles à une distance de 1200 mètres, une erreur de programmation de 10 mètres conduisait à une diminution de probabilité d'atteinte qui pouvait atteindre 50%.

De plus, si le feuillage n'est pas totalement opaque, les cibles 5a,5b et 5c sont vues avec un rapport signal sur bruit maximal car la lumière rétrodiffusée par le feuillage n'est pas captée par la caméra 22, l'obturateur interdisant sa réception.

La figure 4 montre la mise en oeuvre opérationnelle du procédé selon l'invention.

Avec ce procédé on va utiliser le moyen d'observation 7 décrit précédemment de façon à n'observer que les rayonnements réfléchis par les objets situés dans une tranche T de terrain de largeur δ qui est située à une distance D du moyen d'observation 7. Cette tranche T est matérialisée sur la figure 4 par les deux plans 10a et 10b. Ainsi la vision de l'objectif 5a,5b,5c est moins masquée par les obstacles situés entre le véhicule et l'objectif, tels que les arbres 8a,8b,8c.

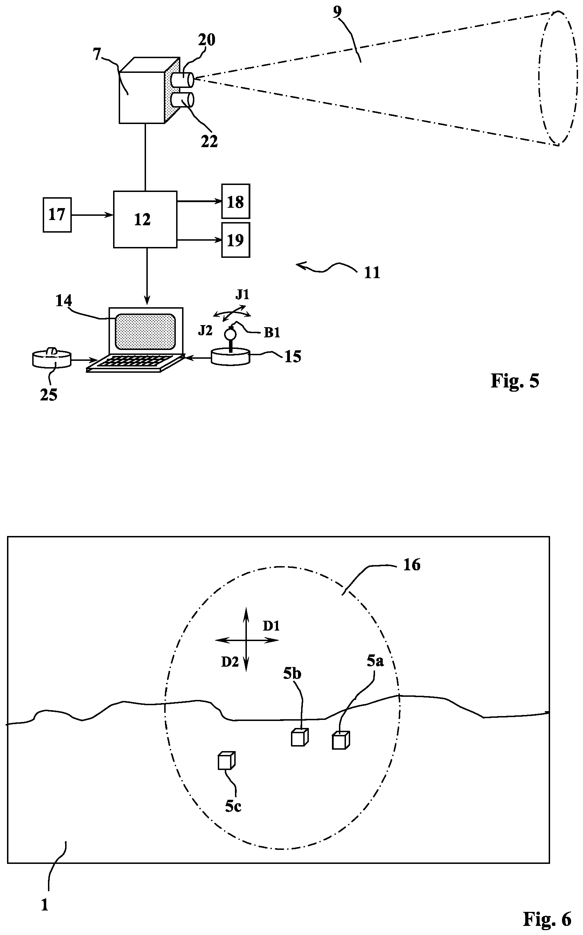

La figure 5 schématise une conduite de tir 11 selon l'invention.

Cette conduite de tir 11 est destinée à fournir les coordonnées du point de déclenchement P pour le projectile 4 sur sa trajectoire.

Elle comprend le moyen d'observation laser 7 qui permet l'observation de tranches T du terrain 1 qui est observé, tranches dont l'épaisseur δ et la distance D peuvent être réglées par l'opérateur. La valeur de la largeur δ de la tranche T est réglée en jouant sur la durée de chaque impulsion émise (ou reçue).

La distance D est réglée par l'opérateur en modifiant le retard entre l'émission et la réception de l'impulsion laser, donc le retard après une émission d'impulsion 23 et à l'issue duquel l'optique de la caméra 22 est ouverte pour recevoir les impulsions réfléchies 24.

Comme mentionné précédemment il est aussi possible de régler la largeur δ par la durée d'ouverture de l'obturateur synchronisé de la caméra 22.

Avantageusement on choisira pour la tranche T une valeur de la largeur δ fixe qui correspond à la profondeur d'une zone d'efficacité du projectile 4. Une telle disposition permet à l'opérateur de déterminer plus facilement le point de déclenchement optimal pour le projectile en faisant varier la seule distance d'observation D.

La conduite de tir comprend aussi un calculateur 12 qui pourra assurer les fonctions de l'électronique de commande 21 du moyen d'observation 7.

La conduite de tir 11 comporte aussi un premier moyen de commande 25 qui est par exemple une molette rotative permettant de régler la valeur du retard R entre émission et réception, donc de modifier la distance D en déplaçant la tranche T d'observation.

Lors de cette opération de modification de la distance D, l'opérateur pourra observer sur un moyen de visualisation, tel un écran 14, la présence de cibles éventuelles.

La figure 6 montre ce que voit l'opérateur sur son écran 14 après mise en oeuvre du moyen d'observation à ouverture synchronisée 7. Les objectifs 5a, 5b et 5c ne sont plus masqués par les arbres 8.

La figure 6 montre une image plane en projection sur le plan de la figure. Il est bien entendu que l'écran 14 de la conduite de tir permet de visualiser une image de la tranche de terrain en relief.

La conduite de tir 11 comporte aussi un second moyen de commande 15 qui est réalisé ici sous la forme d'un levier (ou palonnier) manoeuvrable suivant deux directions orthogonales J1 et J2.

Une fois une tranche T d'acquisition choisie, l'utilisateur utilise le palonnier 15 pour positionner et déplacer, sur l'image du terrain 1, l'image d'une zone d'efficacité 16 (figures 1 et 5).

Cette zone 16 est une image, construite par le calculateur 12, d'une surface ou d'un volume géométrique qui permet de visualiser l'aire ou le volume d'efficacité des éclats engendrés par le projectile considéré lorsqu'il est déclenché au niveau d'un point de déclenchement P (figure 1).

On a représenté sur les figures cette zone d'efficacité sous la forme d'un cône ou de ses sections elliptiques pour la simplification de l'exposé. Il est bien entendu que le volume qui sera superposé à l'image du terrain pourra avoir une forme différente qui dépendra des caractéristiques du projectile 4 mis en oeuvre. Les caractéristiques géométriques des zones d'efficacité 16 associées à différents points P de déclenchement sont incorporées dans des moyens mémoires 17 couplés au calculateur 12.

Il est classique lors de la définition d'un projectile de mesurer la répartition des éclats engendrés par l'explosion du projectile à différentes distances de ce dernier.

On peut ensuite modéliser géométriquement la zone d'efficacité 16 d'un projectile 4 initié au niveau d'un point P donné et constituer une base de données permettant d'associer différentes zones d'efficacité 16 à différents points d'initiation P.

Chaque déplacement de la zone d'efficacité 16 peut donc être automatiquement associé par le calculateur 12 à des coordonnées d'un point d'initiation P associé.

Dans un souci de simplification, le volume géométrique de la zone 16 sera choisi tel qu'il correspond à une répartition des éclats engendrés permettant d'assurer une probabilité d'atteinte ou de neutralisation donnée. Une telle probabilité correspond par exemple à une niveau minimal d'énergie pour les éclats et/ou à une densité minimale des éclats.

On comprend qu'il s'agit de données propres à un type de projectile donné et qui ne dépendent pas des caractéristiques du terrain 1 et des cibles qui s'y trouvent.

On peut donc associer systématiquement à tout point de l'espace un volume géométrique 16 qui correspond à la probabilité d'atteinte souhaitée lorsque le projectile 4 est initié au niveau de ce point.

Suivant l'invention, ce volume est déplacé par l'utilisateur sur l'image en deux ou trois dimensions du terrain 1. Cette image de la zone d'efficacité 16 est semi-transparente et n'occulte donc pas les cibles potentielles 5a, 5b et 5c. Elle pourra aussi avoir une couleur différente de celle du reste de l'image afin de faciliter sa visualisation.

La largeur de la tranche T ayant été choisie égale à la profondeur d'efficacité du projectile, il suffit de proposer à l'opérateur une surface ou un volume 16 donnant la forme de la zone d'efficacité dans la tranche T considérée.

L'utilisateur peut donc aisément déplacer avec le palonnier 15 la zone d'efficacité 16 suivant les directions D1 et D2 (figure 6). Ceci lui permet de déterminer visuellement la position qui permet la neutralisation d'une ou plusieurs cibles 5a,5b,5c avec la probabilité d'atteinte souhaitée.

Lors du déplacement de la zone 16 à l'aide du palonnier 15, le calculateur 12 détermine de façon continue les coordonnées du point P de déclenchement correspondant au positionnement choisi pour la zone d'efficacité 16. Ces coordonnées sont en effet intimement associées à la géométrie de la zone 16 qui est déplacée et un déplacement de la zone 16 correspond en fait à un déplacement du point P, les données étant associées dans les moyens mémoire 17.

La tranche T ayant une largeur égale à celle de la zone d'efficacité, le point P se situe dans un plan situé au milieu de la tranche, à égale distance des plans 10a et 10b.

Lorsque l'utilisateur a choisi une localisation particulière de la zone d'efficacité 16, il actionne un moyen de validation (par exemple un bouton de commande B1 du palonnier 15).

Le calculateur 12 fournit alors à un module de pointage 18 et à un module de programmation 19 les coordonnées du point de déclenchement souhaité P pour le projectile et qu'il a lu dans les moyens mémoire 17.

Ces coordonnées sont utilisées de façon classique par le module de pointage 18 pour commander les pointages en site et gisement du tube de l'arme 3.

Elles sont utilisées par le module de programmation 19 pour programmer l'instant de déclenchement du projectile 4 sur trajectoire.

L'invention a été décrite par souci de simplification dans une application à la commande du déclenchement d'un projectile unique.

Elle peut être mise en oeuvre de façon analogue pour la commande du tir d'une rafale de projectiles. Une rafale comprend un certain nombre de projectiles (4 à 10 par exemple) qui sont tirés successivement à la cadence de tir de l'arme.

De la même façon qu'il est possible par conception de définir une zone d'efficacité d'un projectile unique, il est aussi possible de définir géométriquement une zone d'efficacité d'une rafale comportant un certain nombre de projectiles d'un type donné.

Les moyens de l'invention sont mis en oeuvre de la même façon que décrit précédemment.

Ce qui est visualisé sur l'écran ce n'est cependant plus la zone d'efficacité d'un projectile unique mais celle d'une rafale. Le point P de déclenchement correspond alors à un point moyen, barycentre des points de déclenchement des différents projectiles de la rafale. A partir du choix de la zone d'efficacité, on pourra aussi définir dans la conduite de tir une rafale assurant une initiation avec une dispersion statistique des instants d'initiation des projectiles de la rafale dans la tranche considérée.

Une fois le positionnement de la zone d'efficacité effectué par l'utilisateur, le calculateur 12 transmet comme précédemment au module de pointage 18 et au module de programmation 19 les différents paramètres de tir (angles de pointage) et de gestion de la rafale (programmation de l'instant de déclenchement de chaque projectile).

## Revendications

1. Procédé d'acquisition des coordonnées d'un point de déclenchement (P) d'un projectile (4) ou d'une rafale de projectiles sur trajectoire et au-dessus d'une portion de terrain (1) sur laquelle se trouve un objectif (5a,5b,5c), procédé ***caractérisé en ce qu*'**il comporte les étapes suivantes:
on procède à l'émission d'au moins une impulsion laser ayant une durée déterminée à partir d'une source laser (20) et en direction de la portion de terrain (1) où se trouve l'objectif (5a,5b,5c),
on procède à au moins une réception des images réfléchies par la portion de terrain à l'aide d'un récepteur (22) équipé de moyens permettant de visualiser de façon synchronisée la réflexion des impulsions laser sous la forme d'une tranche (T) d'observation de la portion de terrain, tranche ayant une largeur (δ) éventuellement modifiable par le choix d'une durée de l'émission ou de la réception laser et dont la distance (D) par rapport au récepteur (22) est modifiable par le réglage d'un retard entre l'émission et la réception de l'impulsion laser,
on récupère les coordonnées d'un point de déclenchement (P) souhaité par l'opérateur lorsque ce dernier a choisi la localisation qui lui convient sur une image de la tranche d'observation (T) après avoir déplacé la tranche d'observation (T) par rapport au récepteur (22) et éventuellement réglé la largeur (δ) de la tranche, le point de déclenchement se trouvant à l'intérieur de ladite tranche.

2. Procédé selon la revendication 1, **caractérisé en ce que** la largeur (δ) de la tranche (T) est choisie sensiblement égale à la profondeur d'une zone d'efficacité du projectile (4) ou de la rafale.

3. Procédé selon une des revendications 1 ou 2, **caractérisé en ce qu'**on affiche sur un moyen de visualisation (14) destiné à un opérateur une image de la tranche (T) observée, l'image incorporant en surimpression une image (16) de la zone d'efficacité du projectile ou de la rafale, lorsqu'il ou elle est déclenché au niveau d'un point de déclenchement (P) associé à cette zone d'efficacité (16) et positionné dans la tranche d'observation (T), l'opérateur ayant la possibilité de déplacer la zone d'efficacité (16) par rapport à l'image de la tranche (T), les coordonnées du point de déclenchement (P) étant déterminées après le déplacement de la zone d'efficacité (16).

4. Conduite de tir (11) pouvant être associée à une arme (3) tirant des projectiles (4) ou des rafales de projectiles et permettant de fournir les coordonnées d'un point de déclenchement (P) pour un projectile (4) ou une rafale tiré par l'arme, conduite de tir configurée pour mettre en oeuvre le procédé selon une des revendications précédentes et ***caractérisée en ce qu***'elle comprend :
au moins un moyen d'observation laser (7) à impulsions synchronisées associant une source ou émetteur laser (20) configuré pour émettre des impulsions (23) ayant une durée déterminée et un récepteur (22) équipé de moyens configurés pour permettre de visualiser de façon synchronisée la réflexion des impulsions laser sous la forme d'une tranche (T) d'observation de la portion de terrain ayant une largeur (δ) éventuellement modifiable par le choix d'une durée de l'émission ou de la réception laser et dont la distance (D) par rapport au récepteur (22) est modifiable par le réglage d'un retard (R) entre l'émission et la réception,
un calculateur (12) configuré pour reconstruire à l'aide d'un algorithme approprié une image de la tranche d'observation acquise par le moyen d'observation (7), image qui est affichée sur un moyen de visualisation (14),
un premier moyen de commande (25) destiné à un utilisateur et configuré pour permettre de positionner et déplacer ladite tranche d'observation (T) à plus ou moins grande distance du moyen d'observation (7),
un second moyen de commande (15) configuré pour permettre à l'opérateur de positionner et déplacer sur l'image de la tranche observée une image (16) en surimpression d'une zone d'efficacité du projectile (4) ou de la rafale, lorsqu'il ou elle est déclenché au niveau d'un point de déclenchement (P) choisi dans la tranche d'observation (T),
le calculateur (12) configuré pour déterminer de façon continue les coordonnées du point de déclenchement (P) associé à la zone d'efficacité (16) et qui est situé à l'intérieur de la tranche (T) lorsque l'opérateur met en oeuvre les premier (25) et second (15) moyens de commande pour déplacer la tranche d'observation (T) et la zone d'efficacité (16),
un moyen de validation (B1) configuré pour permettre à l'utilisateur de choisir une localisation particulière de la zone d'efficacité (16), le calculateur (12) étant configuré pour fournir alors les coordonnées du point de déclenchement (P) souhaité pour le projectile (4) ou la rafale.

5. Conduite de tir selon la revendication 4, **caractérisée en ce que** le récepteur est une caméra (22) équipée d'un obturateur synchronisé avec l'émission laser et ouvrant la caméra (22) à l'issue d'au moins un retard (R) déterminé par rapport à l'émission, le retard entre l'émission et la réception permettant de régler la distance (D) de la tranche d'observation (T) par rapport au récepteur (22).

6. Conduite de tir selon la revendication 5, **caractérisée en ce que** l'obturateur synchronisé permet aussi de régler la largeur (δ) de la tranche d'observation (T).

7. Conduite de tir selon une des revendications 4 à 6, **caractérisé en ce que** l'image de la zone d'efficacité (16) est semi-transparente.

8. Conduite de tir selon la revendication 7, **caractérisé en ce que** l'image de la zone d'efficacité (16) est dans une couleur différente de celle du reste de l'image.

## Patentansprüche

1. - Verfahren zur Erfassung der Koordinaten einer Abfeuerungsstelle (P) eines Geschosses (4) oder einer Salve von Geschossen auf der Flugbahn und oberhalb eines Geländeabschnitts (1), auf dem sich ein Ziel (5a, 5b, 5c) befindet, wobei das Verfahren **dadurch gekennzeichnet ist, dass** es die folgenden Schritte umfasst:
man bewerkstelligt mindestens eine Aussendung eines Laserimpulses mit einer bestimmten Dauer von einer Laserquelle (20) aus und in Richtung auf den Geländeabschnitt (1), wo sich das Ziel (5a,5b,5c) befindet,
man bewerkstelligt mindestens einen Empfang der vom Geländeabschnitt reflektierten Bilder mit Hilfe eines Empfängers (22), der mit Mitteln ausgestattet ist, die eine synchronisierte Darstellung der Reflexion der Laserimpulse in Form eines Beobachtungsabschnitts (T) des Geländeabschnitts ermöglichen, wobei die Breite (δ) des Beobachtungsabschnitts eventuell durch die Auswahl einer Dauer der Laseraussendung oder des Laserempfangs veränderbar ist, und dessen Abstand (D) vom Empfänger (22) durch die Einstellung einer Verzögerung zwischen der Aussendung und dem Empfang des Laserimpulses veränderbar ist,
wobei man die Koordinaten einer vom Bediener gewünschten Abfeuerungsstelle (P) erlangt, wenn letzterer den für ihn passenden Ort auf einem Bild des Beobachtungsabschnitts (T) gewählt hat, nachdem er den Beobachtungsabschnitt (T) im Verhältnis zum Empfänger (22) verschoben hat und eventuell die Breite (δ) des Abschnitts eingestellt hat, wobei die Abfeuerungsstelle sich in besagtem Abschnitt befindet.

2. - Verfahren nach Anspruch 1, **gekennzeichnet dadurch, dass** die Breite (δ) des Abschnitts (T) im wesentlichen gleich der Tiefe eines Wirkungsbereich des Geschosses (4) oder der Salve gewählt wird.

3. - Verfahren nach einem der Ansprüche 1 oder 2, **dadurch gekennzeichnet, dass** man auf einem Anzeigemittel (14), das für einen Bediener bestimmt ist, ein Bild des beobachteten Abschnitts (T) anzeigt, wobei das Bild in Überlagerung ein Bild (16) des Wirkungsbereichs des Geschosses oder der Salve enthält, wenn es oder sie an einer Abfeuerungsstelle (P) abgefeuert wird, der diesem Wirkungsbereich (16) zugeordnet und in dem Beobachtungsabschnitt (T) gelegen ist, wobei der Bediener die Möglichkeit hat, den Wirkungsbereich (16) im Vergleich zu dem Bild des Abschnitts (T) zu verschieben, wobei die Koordinaten der Abfeuerungsstelle (P) nach der Verschiebung des Wirkungsbereichs (16) bestimmt werden.

4. - Feuerleitanlage (11), die mit einer Waffe (3) verbunden sein kann, die Geschosse (4) oder Salven von Geschossen abfeuert, und die es ermöglicht, die Koordinaten einer Abfeuerungsstelle (P) für ein von der Waffe abgefeuertes Geschoss (4) oder Salve zu liefern, wobei die Feuerleitanlage konfiguriert ist, um das Verfahren nach einem der vorherigen Ansprüche umzusetzen, und **dadurch gekennzeichnet ist, dass** sie folgendes umfasst:
mindestens ein Laser-Beobachtungsmittel (7) mit synchronisierten Impulsen und mit einer konfigurierten Laserquelle oder -sender (20) zum Abgeben von Impulsen (23) mit einer bestimmten Dauer, und einem Empfänger (22) mit Mitteln, die zur synchronisierten Darstellung der Reflexion der Laserimpulse in Form eines Beobachtungsabschnitts (T) des Geländeabschnitts konfiguriert sind, dessen Breite (δ) eventuell durch die Auswahl einer Dauer der Laseraussendung oder des Laserempfangs veränderbar ist und dessen Abstand (D) vom Empfänger (22) durch die Einstellung einer Verzögerung (R) zwischen Aussendung und Empfang veränderbar ist,
einen Rechner (12), der konfiguriert ist, um mit Hilfe eines geeigneten Algorithmus ein Bild des vom Beobachtungsmittel (7) erworbenen Beobachtungsabschnitts zu rekonstruieren, wobei das Bild auf einem Anzeigemittel (14) angezeigt wird,
ein erstes für einen Benutzer bestimmtes Steuermittel (25), das konfiguriert ist, um den Beobachtungsabschnitt (T) in mehr oder weniger großem Abstand vom Beobachtungsmittel (7) zu positionieren und zu verlagern,
ein zweites Steuermittel (15), das konfiguriert ist, um es dem Bediener zu gestatten, auf dem Bild des beobachteten Abschnitts ein Bild (16) in Überlagerung eines Wirkungsbereichs des Geschosses (4) oder der Salve zu positionieren und zu verlagern, wenn es oder sie an einer in dem Beobachtungsabschnitt (T) gewählten Abfeuerungsstelle (P) abgefeuert wird,
wobei der Rechner (12) konfiguriert ist, um kontinuierlich die Koordinaten der Abfeuerungsstelle (P) in Verbindung mit dem Wirkungsbereich (16) zu bestimmen, und der in dem Abschnitt (T) liegt, wenn der Bediener das erste (25) und das zweite (15) Steuermittel zum Verschieben des Beobachtungsabschnitts (T) und des Wirkungsbereichs (16) aktiviert,
ein Validierungsmittel (B1), das konfiguriert ist, um es dem Benutzer zu gestatten, eine besondere Lokalisierung des Wirkungsbereichs (16) zu wählen, wobei der Rechner (12) konfiguriert ist, um dann die Koordinaten der gewünschten Abfeuerungsstelle (P) für das Geschoss (4) oder die Salve zu liefern.

5. - Feuerleitanlage nach Anspruch 4, **dadurch gekennzeichnet, dass** der Empfänger eine Kamera (22) mit einer Blende ist, die mit der Laseraussendung synchronisiert ist, und die die Kamera (22) am Ende mindestens einer Verzögerung (R) im Vergleich zu der Aussendung öffnet, wobei die Verzögerung zwischen der Aussendung und dem Empfang es ermöglicht, den Abstand (D) des Beobachtungsabschnitts (T) vom Empfänger (22) einzustellen.

6. - Feuerleitanlage nach Anspruch 5, **dadurch gekennzeichnet, dass** die synchronisierte Blende es auch gestattet, die Breite (δ) des Beobachtungsabschnitts (T) einzustellen.

7. - Feuerleitanlage nach einem der Ansprüche 4 bis 6, **gekennzeichnet dadurch, dass** das Bild des Wirkungsbereichs (16) halbtransparent ist.

8. - Feuerleitanlage nach Anspruch 7, **gekennzeichnet dadurch, dass** das Bild des Wirkungsbereichs (16) eine andere Farbe als der Rest des Bildes hat.

## Claims

1. - A method for acquiring the coordinates of a trigger point (P) of a projectile (4) or of a burst of projectiles on a trajectory and above a field part (1) on which a target (5a, 5b, 5c) is located, **characterised in that** it comprises the following steps:
emitting from a laser source (20) at least one laser pulse having a predetermined duration and directed towards the field part (1) where the target (5a, 5b, 5c) is located,
receiving the images reflected by the field part with a receiver (22) equipped with means for the synchronous visualization of the reflection of the laser pulses under the form of a piece of observation (T) of the field part, the piece having a width (δ) which can be possibly modified by selecting a duration for the laser emission or reception, and whose distance (D) with respect to the receiver (22) can be modified by adjusting a delay between the emission and the reception of the laser pulse,
recovering the coordinates of a trigger point (P) desired by the operator when the latter has chosen a suitable location on an image of the piece of observation (T) after having moved the piece of observation (T) with respect to the receiver (22) and possibly adjusted the width (δ) of the piece, the trigger point being within said piece.

2. - The method according to claim 1, **characterised in that** the width (δ) of the piece (T) is chosen substantially equal to the depth of an area of effectiveness of the projectile (4) or of the burst.

3. - The method according to one of claims 1 or 2, **characterised in that** an image of the observed piece (T) is displayed on means for visualization (14) intended for an operator, the image comprising a superimposed image (16) of the area of effectiveness of the projectile or of the burst, when fired at a trigger point (P) associated with this area of effectiveness (16) and positioned in the piece of observation (T), the operator having the option to move the area of effectiveness (16) with respect to the image of the piece (T), the coordinates of the trigger point (P) being determined after the area of effectiveness (16) was moved.

4. - A fire-control system (11) which can be associated with a weapon (3) firing projectiles (4) or bursts of projectiles and allowing to provide the coordinates of a trigger point (P) for a projectile (4) or a burst fired by the weapon, the fire-control system being configured to implement the method according to one of the preceding claims and **characterised in that** it comprises:
at least one synchronized pulses laser observation means (7) associating a laser source or emitter (20) configured to emit pulses (23) having a determined duration with a receiver (22) equipped with means configured for the synchronous visualization of the reflection of the laser pulses under the form of a piece of observation (T) of the field part having a width (δ) which can possibly be modified by selecting a duration for the laser emission or reception, and whose distance (D) with respect to the receiver (22) can be modified by adjusting a delay (R) between the emission and the reception,
a computer (12) configured to rebuild, using a suitable algorithm, an image of the piece of observation acquired by the observation means (7), the image being displayed on means for visualization (14),
first control means (25) intended for a user and configured to allow to position and move said piece of observation (T) at a greater or shorter distance from the observation means (7),
second control means (15) configured to allow the operator to position and move, on the image of the piece observed, a superimposed image (16) of an area of effectiveness of the projectile (4) or burst, when fired at a trigger point (P) chosen in the piece of observation (T),
the computer (12) being configured to continuously determine the coordinates of the trigger point (P) associated with the area of effectiveness (16) and positioned within the piece (T) when the operator activates the first (25) and second (15) control means to move the piece of observation (T) and the area of effectiveness (16),
validation means (B1) configured to allow the user to choose a particular location of the area of effectiveness (16), the computer (12) being thus configured to provide the coordinates of the desired trigger point (P) for the projectile (4) or burst.

5. - The fire-control system according to claim 4, **characterised in that** the receiver is a camera (22) equipped with a shutter synchronized with the laser emission and opening the camera (22) at the end of at least one delay (R) determined with respect to the emission, the delay between the emission and the reception allowing to adjust the distance (D) of the piece of observation (T) with respect to the receiver (22).

6. - The fire-control system according to claim 5, **characterised in that** the synchronized shutter also allows to adjust the width (δ) of the piece of observation (T).

7. - The fire-control system according to one of claims 4 to 6, **characterised in that** the image of the area of effectiveness (16) is semi-transparent.

8. - The fire-control system according to claim 7, **characterised in that** the image of the area of effectiveness (16) has a color different from the color of the rest of the image.
